# EUROPEAN PATENT SPECIFICATION

(11) **EP 3 767 180 B1**
(45) Date of publication and mention of the grant of the patent: **27.05.2026**
(21) Application number: 19187192.0
(22) Date of filing: 19.07.2019
(51) Int. Cl.: F24C 3/12, F24C 7/08, H05B 6/12, H05B 6/06

(54) **COOKING HOB HAVING HEATING ZONES WITH DIFFERENT TEMPERATURES**
KOCHFELD MIT HEIZZONEN MIT UNTERSCHIEDLICHEN TEMPERATUREN
PLAQUE DE CUISSON DOTÉ DE ZONES DE CHAUFFAGE AVEC DIFFÉRENTES TEMPÉRATURES

(43) Date of publication of application: 20.01.2021
(73) Proprietor: ELECTROLUX APPLIANCES AKTIEBOLAG, 105 45 Stockholm (SE)
(72) Inventor: REUL, Kurt, 91541 Rothenburg ob der Tauber (DE); HOFFMANN, Harald, 91541 Rothenburg ob der Tauber (DE)
(74) Representative: Electrolux Group Patents

(56) References cited:
- EP-A1- 3 297 400
- EP-A1- 3 316 663
- EP-A1- 3 445 134
- EP-A1- 3 509 399
- WO-A1-2008/122495
- WO-A1-2011/012418
- WO-A1-2016/134779
- US-A1- 2011 168 694
- US-A1- 2016 157 301
- US-A1- 2017 055 318
- US-A1- 2017 181 228

## Description

The present invention relates to a cooking hob for a domestic or an industrial appliance. Further, the present invention relates to a method for performing a cooking process on a cooking hob.

Usually, a cooking hob comprises several heating zones. The power and/or temperature of each heating zone are individually adjustable by the user and controllable by a control unit of the cooking hob.

The document WO 2015/015360 A1 discloses an induction cooktop having at least two heating elements which are arranged next to each other and are provided at least to heat positioned cookware and having at least one control unit. The control unit determines, in at least one operation mode, a plurality of virtual heating zones having different heat output density depending on a size of at least one positioned piece of cookware, wherein the virtual heating zones are formed by heating elements arranged adjacent to one another.

The document WO 2015/015361 A1 discloses an induction cooktop having at least two heating elements for heating positioned cookware and having one control unit which is provided in order to activate at least one first heating element allocated to a first position of a positioned piece of cookware. The control unit can, for the case of a change from the first position of the cookware to a second position of the cookware, to deactivate at least one first heating element allocated to the first position of the cookware and to activate at least one second heating element which is allocated to the second position of the cookware and has differing heat output density than the first heating element.

WO 2016/134779 A1 relates to an induction cooking appliance comprising a top surface which has a flexible zone with two side-by-side subzones, two induction coils, two driving units each for driving a corresponding coil within a power range and a control unit with a flexible mode.

EP 3 509 399 A1 describes an induction heating cooker that has first and second heating coil units disposed adjacent to each other and a controller that controls the first and second heating coil units.

EP 3 445 134 A1 is concerned with a cooking appliance comprising: a plurality of cooking zones; means for detecting whether cookware is present in the cooking zones; and a user interface for setting a power level for each of the cooking zones, and for selecting whether at least two cooking zones are operated independently or as a combined cooking zone.

US 2016/157301 A1 describes a cooktop device that includes at least one heater arrangement, and at least one control unit configured to define in at least one operating mode a number of virtual heating zones with different heat output densities depending on a size of the cookware.

US 2011/168694 A1, US 2017/181228 A1 and EP 3 297 400 A1 disclose further relevant cooking hobs of the state of the art. WO 2008/122495 A1 discloses a cooking hob according to the preamble of claim 1.

It is an object of the present invention to provide an improved cooking hob, wherein the cooking temperature can be determined by the user in an easy way.

The object is achieved by the cooking hob according to claim 1.

According to the present invention a cooking hob for a domestic or an industrial appliance is provided, wherein:
- the cooking hob comprises at least one heating area,
- the heating area comprises at least a first and a second heating zone, wherein, in a first operation mode, the first and second heating zones are configured for being operated as heating zones separate from each other and, in a second operation mode, the first and second heating zones are configured for being operated as one joint heating zone;
- each of the first and second heating zone includes at least one heating element, wherein the first and second heating zones are operable or operated to heat a particular cookware item in such way that foodstuff disposed within the particular cookware is heated to a defined temperature, when the particular cookware is placed above one of the first or second heating zones in the first operation mode, and in such way that foodstuff disposed within the particular cookware is heated to a defined temperature, when the particular cookware is placed at least partially above both the first and second heating zones in the second operation mode;
- wherein the cooking hob further comprises an automatic temperature control for controlling the temperature of the particular cookware or for controlling the temperature of the foodstuff disposed within the particular cookware;
- and wherein the automatic temperature control is configured to control a first separate temperature related to the first heating zone and to control a second separate temperature related to the second heating zone in the case that the first and second heating zones are operated as separate heating zones in the first operation mode and wherein the automatic temperature control is configured to control a first common temperature related to the first and second heating zone in the case that first and second heating zone are operated as one joint heating zone in the second operation mode.

Such a cooking hob advantageously allows a user to use a so called chef mode in which the user defines specific heating zones to be temperature zones providing defined temperature for cookware placed upon. Thus, it is no longer necessary to adapt or reset the temperature of the heating zones, but only to move the cookware item from one temperature zone to another, e.g. from a searing zone to a soft cooking zone to a holding zone. The automatic temperature control for the heating zones can be adapted with a high degree of freedom and enables comfort and exact and delay free achievement of the desired temperature of the foodstuff or the cookware item, respectively.

In an advantageous embodiment according to the invention, the cooking hob enables the user to select, in particular for all heating zones provided on the cooking hob, if heating zones shall be operated in the first operation mode or in the second operation mode.

Thus, the user is enabled to define separate heating zones and joint heating zones flexibly by himself. User comfort is increased.

According to a further advantageous embodiment the cooking hob is configured or can be configured by user input
to operate at least a first and second heating zone in the first operation mode
   or
to operate at least a first or a second heating zone in the first operation mode and one joint heating zone in the second operation mode at the same time
   or
to operate at least two joint heating zones at the same time in the second operation mode.

Thus, the cooking hob can be operated with a high degree of freedom, in particular in such way that the user can combine heating zones as he or she desires and that the combination can be easily provided.

In a further advantageous embodiment of the invention, at least two, preferably at least three, separate and/or joint heating zones can be operated at set temperatures being different from each other, wherein each of the at least two, preferably at least three, heating zones is subject to the automatic temperature control, wherein each of the different set temperatures is controlled separately by the automatic temperature control.

Thus, a chef mode is advantageously enabled, wherein automatic temperature control is provided. Thus, the temperatures defined for the different chef mode temperature zones are controlled precisely on the real temperature of the cookware item or the food placed therein. The set temperatures can be reached quickly and without delay.

According to a further advantageous embodiment, the cooking hob enables the user to switch on or off the automatic temperature control for one or more specific separate or joint heating zones.

Thus, the automatic temperature control can be used when necessary, and can be switched off when it is not needed. Thus, energy can be saved.

According to the invention, the cooking hob enables the user to couple joint heating zones, in such way that the set temperatures of the coupled heating zones are jointly adjustable, wherein the difference between the set temperatures of adjacent heating zones or of jointly adjustable heating zones is between 10°C and 80°C, preferably between 20°C and 60°C, in particular between 30°C and 40°C.

According to a further advantageous embodiment, the cooking hob enables the user to couple specific separate and/or joint heating zones, by means of only one user input or by means of only one input element.

Thus, it is possible for the user to define coupled or combined separate and/or joint heating zones which can be adjusted together, e.g. such that the temperature of all coupled or combined heating zones can be increased or decreased for 10°C.

According to the invention, the automatic temperature control comprises at least one closed loop control for controlling the set temperature of a joint heating zone. In a further advantageous embodiment, the automatic temperature control comprises separate closed loop controls for controlling separately each of the first or second heating zone or of a joint heating zone.

Thus, independent automatic temperature control can be achieved for each heating zone as defined by the user. Thus, efficient control of the set temperatures for each heating zone is provided.

According to a further advantageous embodiment, the cooking hob comprises at least one temperature sensor for each heating zone, wherein preferably at least one temperature sensor is provided for each heating element.

It is particularly advantageous if each heating element is associated with at least one temperature sensor of if at least one temperature sensor is arranged adjacent to each heating element. The temperature sensor in this case are able to detect temperature related parameter values with respect to cookware placed above the heating element.

Further advantageously, the automatic temperature control comprises at least one temperature measurement unit, at least one control unit and at least one power unit, wherein the temperature measurement unit is configured to receive a signal or signals representative of temperature parameters detected by the temperature sensor(s) associated to a specific separate and/or joint heating zone and/or to transfer a signal or signals representative of temperature parameters detected by the temperature sensor(s) associated to a specific separate and/or joint heating zone to the control unit, wherein the control unit outputs a control signal based on the temperature parameter detected by the temperature sensors for a specific separate and/or joint heating zone to the power unit such that the power unit controls the amount of energy supplied to the respective separate and/or joint heating zone in order to constantly maintain the temperature set for the respective separate and/or joint heating zone.

The temperature measurement unit and the control unit can be part of a central processing unit that calculates on the basis of the received temperature parameter information which output signal has to be output in order to achieve the set temperature on the specific heating zone.

Also advantageous it is that the cooking hob comprises at least three heating elements, in particular three induction coils, each heating element being associated with a temperature sensor, and one power unit, in particular comprising a power circuit board, wherein the power unit is operably, in particularly electrically, coupled to each of the heating elements, wherein the power unit can drive each of the heating elements separately and can drive the heating elements in combination such that all heating elements associated to one joint heating zone are driven by the power unit in a way that the a temperature set for the joint heating zone can be constantly maintained.

Such an embodiment enables to use a "Chef-mode" in a even more advantageous form. The user is enabled to define specific heating zones to be temperature zones providing defined temperature for cookware placed upon. A searing zone, a soft cooking zone and a holding zone can be realized in positions adjacent to each other, wherein the automatic temperature control for the heating zones can be selectively used for the specific heating zones, wherein the desired temperature of the foodstuff or the cookware item can be controlled separately or jointly.

A further advantageous embodiment of the cooking hob comprises at least four heating elements, in particular four induction coils, and at least two power units, wherein each heating element being associated with a temperature sensor, and one power unit, in particular wherein each power unit comprises a power circuit board, wherein the power units are operably, in particular electrically, coupled to heating elements that are exclusively associated to exact one power unit, wherein the power units can drive their associated heating elements separately and can drive their associated heating elements in combination such that those heating elements that are associated to one joint heating zone are driven by their associated power unit in a way that the a temperature set for the joint heating zone can be constantly maintained.

Driving a number of, e.g. four, coils with two different power unit or power circuit boards allows a more precise adaption of the power supplied to the respective coils, e.g. a more precise adaption of induction frequency or current to the cookware placed above the coils. Maintenance of a constant temperature of the cookware item or the foodstuff placed within the cookware item can be achieved precisely.

Additionally, the cooking hob may comprise at least one memory for storing an adjustment of temperatures on the heating zones, wherein preferably the memory is adapted to store a fine adjustment of the temperatures on the heating zones or related to the heating zones.

Moreover, the memory may be adapted to store the adjustment or fine adjustment, respectively, of temperatures on the heating zones or of temperatures related to the heating zones for at least one individual cookware item.

For example, the cooking hob may be an induction cooking hob, wherein the heating elements are induction coils.

According to another example, the cooking hob may be a radiant cooking hob, wherein the heating elements are radiant heating elements.

Further, the cooking hob may be a gas cooking hob, wherein the heating elements are gas burner assemblies.

Moreover, the cooking hob may be a combination of an induction cooking hob, a radiant cooking hob and/or a gas cooking hob.

Preferably, the cooking hob comprises at least one glass ceramic panel covering the heating area.

Further, the cooking hob may comprise:
- at least one heating area,
- the heating area is subdivided or divisible into at least two adjacent heating zones,
- each heating zone includes at least one heating element,
- the temperature of each heating zone is separately adjusted or adjustable by the user or predefined by the producer, and
- a cookware item is placeable on one heating zone or on more adjacent heating zones.

It is possible that the cooking temperature depends on the position of the cookware item on the heating area, wherein said heating area is subdivided or divisible into adjacent heating zones with different temperatures. The cooking temperature may be the temperature inside the cookware item. If the cookware item is arranged above one heating zone, then the cooking temperature may correspond with the temperature of said heating zone. If the cookware item is arranged above two adjacent heating zones, then the cooking temperature may correspond with an intermediate temperature of the temperatures of said adjacent heating zones. The user may be enabled to change the cooking temperature by changing the position of the cookware item. It is not necessary to change the adjustment of the temperature and/or power of the heating zone. Before the cooking process, the user is able to define the temperature of each heating zone or the temperature of each heating zone is predefined by the producer. In a special case, the heating zones are individually activatable.

Moreover, the heating zones may be defined by the user before the cooking process, wherein the temperatures of a plurality of heating elements of the heating area on the cooking hob may be separately adjusted by the user. Alternatively, the temperatures of the heating zones may be predefined by the producer. For example, the heating elements are arranged as a matrix on the heating area of the cooking hob. In this case, adjusted heating elements having the same temperature form the heating zone.

For example, the cooking hob comprises at least one pot detection device for recognising the heating zone or heating zones, on which the cookware item is placed. The pot detection device allows that only those heating zones are activated, which are completely or partially covered by the cookware item.

In particular, the cooking hob comprises at least one temperature sensor for each heating zone, wherein preferably at least one temperature sensor is provided for each heating element. For example, if the heating element is an induction coil or a radiant heating element, then the temperature sensor is arranged in the centre of said induction coil or radiant heating element, respectively. Additionally or alternatively, a sensor for evaluating the temperature of the cookware and or the food in the cookware item may be provided, for example an external sensor placed in the food, a vibration sensor, an optical system, a weight measuring sensor or a sensor for evaluating the electrical characteristics inside the power boards of induction heated systems.

The temperature sensor may be provided for detecting or evaluating the temperature of the cookware item placed on the heating zone(s). Further, the temperature sensor may be provided for detecting the temperature of the food in the cookware item placed over the heating zone(s).

Moreover, at least one sensor for detecting a physical parameter related to the temperature of the food or water in the cookware item placed on the heating zone(s) may be provided.

Furthermore, any data output of the power board like frequency, power, phase angle of voltage and/or current, efficiency factor or any combination of these parameters may be used to compute the temperature of the cookware item and/or the food.

Further, the cooking hob may comprise a control unit for controlling the temperature on each heating zone, preferably a constant temperature on each heating zone.

Furthermore, a method for performing a cooking process on a cooking hob for a domestic or an industrial appliance is disclosed, wherein said method comprises the steps of:
- providing at least one heating area subdivided into at least two adjacent heating zones,
- adjusting or activating separately the temperature of each heating zone, and
- placing a cookware item on one heating zone or on more adjacent heating zones, so that a desired cooking temperature is obtained.

The method provides that the heating area is subdivided into adjacent heating zones with different temperatures. If the cookware item is arranged above one heating zone, then the cooking temperature corresponds with the temperature of said heating zone. If the cookware item is arranged above two adjacent heating zones, then the cooking temperature corresponds with an intermediate temperature of the temperatures of said adjacent heating zones. Thus, the user is able to change the cooking temperature by changing the position of the cookware item. Moreover, the temperature of each heating zone is defined by the user.

Further, the method may comprise the further step of recognising the heating zone or heating zones, on which the cookware item is placed. The recognition of the position of the cookware item allows that only those heating zones are activated, which are completely or partially covered by the cookware item.

In particular, the heating zones are defined by the user, wherein the temperatures of a plurality of heating elements of the cooking hob are separately adjusted by the user. Adjusted heating elements having the same temperature form the heating zone.

Further, the adjustment of temperatures on the heating zones may be stored. Preferably a fine adjustment of the temperatures on the heating zones is stored.

Additionally, the adjustment or fine adjustment of temperatures on the heating zones is stored for at least one individual cookware item.

At last, the method may be provided for the cooking hob mentioned above.

Novel and inventive features of the present invention are set forth in the appended claims.

The present invention will be described in further detail with reference to the drawing, in which
- FIG 1: illustrates a schematic top view of a heating area on a cooking hob according to a first embodiment of the present invention,
- FIG 2: illustrates a schematic top view of the heating area on the cooking hob according to a second embodiment of the present invention,
- FIG 3: illustrates a schematic top view of the heating area on the cooking hob according to a third embodiment of the present invention,
- FIG 4: illustrates a schematic top view of the heating area on the cooking hob according to a fourth embodiment of the present invention, wherein a cookware item is in a first position,
- FIG 5: illustrates a schematic top view of the heating area on the cooking hob according to the fourth embodiment of the present invention, wherein the cookware item is in a second position, and
- FIG 6: illustrates a schematic top view of the heating area on the cooking hob according to the fourth embodiment of the present invention, wherein the cookware item is in a third position,
- FIG 7: illustrates a block diagram showing the function of a closed loop automatic temperature control according to a first embodiment,

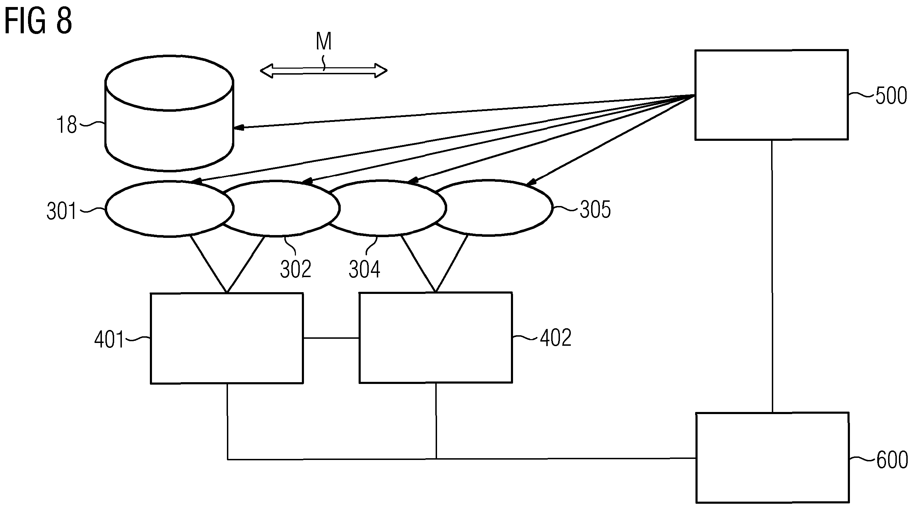

- FIG 8: illustrates a block diagram showing the function of a closed loop automatic temperature control according to a second embodiment.

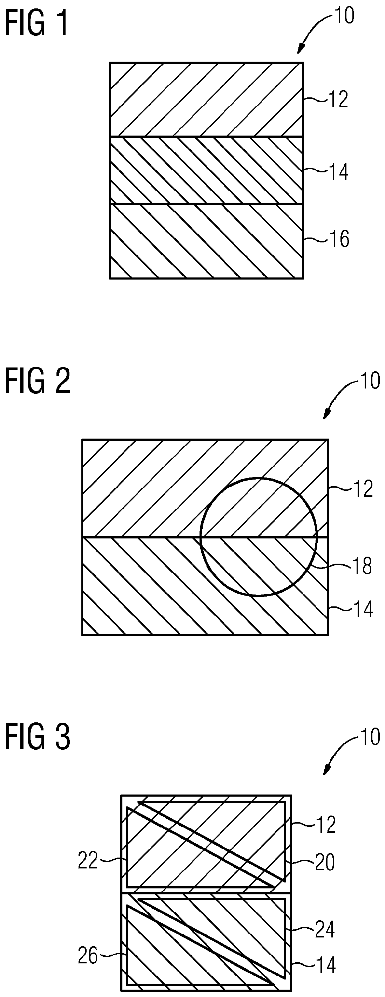

FIG 1 illustrates a schematic top view of a heating area 10 on a cooking hob according to a first embodiment of the present invention.

The heating area 10 is subdivided into three rectangular heating zones 12, 14 and 16 arranged side by side. Preferably, the three heating zones 12, 14 and 16 have different temperatures. A first heating zone 12 has a high temperature. A second heating zone 14 has a medium temperature. A third heating zone 16 has a low temperature. In this example, the heating zones 12, 14 and 16 are arranged with increasing temperatures, so that the heating zone 14 with the medium temperature is arranged between the heating zone 12 with the high temperature and the heating zone 16 with low temperature.

For example, the one heating zone of heating zones 12, 14 and 16 with the highest temperature may be arranged closest to the user or the front of the cooking hob in order to allow that the food in the pan can be easier turned.

However, in a special case, two or more heating zones 12, 14 and 16 may have the same temperature.

In particular, each heating zone 12, 14 and 16 comprises a temperature sensor, so that the temperature on each heating zone 12, 14 and 16 is individually controllable.

For example, the high temperature in the first heating zone 12 is about 180°C, the medium temperature in the second heating zone 14 is about 150°C and the low temperature in the third heating zone 16 is about 100°C. In order to obtain a desired cooking temperature, a cookware item 18 has to be placed in a suitable position on the cooking area 10. If the desired cooking temperature corresponds with the temperature of one heating zone 12, 14 or 16, respectively, then the cookware item 18 has to be placed directly above the corresponding heating zone 12, 14 or 16. If an intermediate cooking temperature is desired, then the cookware item 18 has to be placed half on each on two adjacent heating zones 12, 14 and/or 16. For example, if a cooking temperature of 165°C is desired, then the cookware item 18 has to be placed one half each on the first heating zone 12 and on the second heating zone 14.

The cooking temperature is determined by the position of the cookware item 18 on the cooking area 10. The user determines the cooking temperature by selecting the position of the cookware item 18 on the cooking area 10. It is not necessary to adjust the desired cooking temperature. However, the temperatures in the heating zones 12, 14 and 16 may be adjustable by the user. For example, if the user requires five cooking temperatures of 100°C, 120°C, 140°C, 160°C and 180°C and has three adjacent heating zones 12, 14 and 16 available, the cooking temperatures of 100°C, 140°C and 180°C adjusted in said heating zones 12, 14 and 16. Then, the cooking temperatures of 100°C, 140°C and 180°C are obtained by placing the cookware item 18 on the corresponding heating zones 12, 14 or 16. However, if the cooking temperature of 120°C is desired, then the cookware item 18 has to be placed one half each on the heating zone with 100°C and on the heating zone with 140°C. In a similar way, if the cooking temperature of 160°C is desired, then the cookware item 18 has to be placed one half each on the heating zone with 140°C and on the heating zone with 180°C.

The cooking hob may be an induction cooking hob, a radiant cooking hob, a gas cooking hob a combination thereof. Preferably, the cooking hob is an induction cooking hob or a radiant cooking hob. Each heating zone 12, 14 and 16 includes at least one heating element. Preferably, each heating zone 12, 14 and 16 includes one heating element in order to obtain a cooking hob by low complexity. In particular, the cooking hob comprises a glass ceramic panel covering the heating zone 10, if the cooking hob is an induction cooking hob or a radiant cooking hob.

For example, each heating zone 12, 14 and 16 in FIG 1 includes an elliptic or rectangular induction coil. Alternatively, each heating zone 12, 14 and 16 in FIG 1 may include an elliptic, a rectangular or a triangular radiant heating element.

FIG 2 illustrates a schematic top view of the heating area 10 on the cooking hob according to a second embodiment of the present invention.

The heating area 10 is subdivided into two rectangular heating zones 12 and 14 arranged side by side. Both heating zones 12, 14 and 16 have different temperatures. In this example, the first heating zone 12 has a low temperature, while the second heating zone 14 has a high temperature. The cookware item 18 is placed one half each on the first heating zone 12 and on the second heating zone 14. Thus, the cooking temperature in the cookware item 18 is an average of the temperatures in the first heating zone 12 and second heating zone 14.

FIG 3 illustrates a schematic top view of the heating area 10 on the cooking hob according to a third embodiment of the present invention.

The heating area 10 is subdivided into two rectangular heating zones 12 and 14 arranged side by side. Both heating zones 12 and 14 have different temperatures. In this example, the first heating zone 12 has a high temperature, while the second heating zone 14 has a low temperature. The first heating zone 12 includes two triangular heating elements 20 and 22. In a similar way, the second heating zone 14 includes two triangular heating elements 24 and 26. Said heating elements 20, 22, 24 and 26 may be induction coils and/or radiant heating elements.

The arrangement of the four triangular heating elements 20, 22, 24 and 26 in FIG 3 allows other subdivisions of the heating area 10 into heating zones by adjusting the temperatures of each triangular heating element 20, 22, 24 and 26. In this case, each heating element 20, 22, 24 and 26 comprises particularly a temperature sensor. For example, each triangular heating element 20, 22, 24 and 26 forms a corresponding heating zone, so that four heating zones with different temperatures are formed. According to another example, the second heating element 22 and the third heating element 24 form a central heating zone, while the first heating element 20 and the second heating element 26 form a separate outer heating zone in each case. In the latter case, the heating area comprises the central heating zone with the heating element 22 and 24 and the outer heating zones with the heating element 20 and 26, respectively. The central heating zone has the double size of the outer heating zone.

For example, the heating zones 12, 14 and 16 within the heating area 10 may be flexible. The heating zones 12, 14 and 16 may be also defined by the user, wherein the temperatures of a plurality of heating elements are adjusted by the user as explained below.

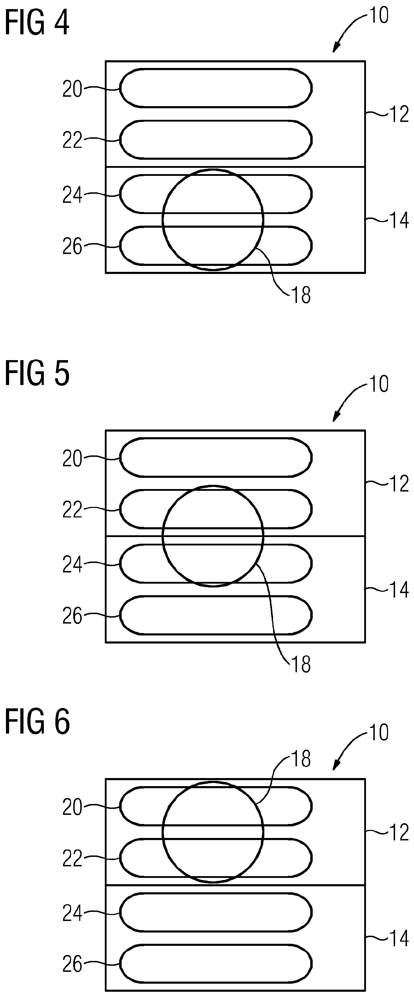

FIG 4 illustrates a schematic top view of the heating area 10 on the cooking hob according to a fourth embodiment of the present invention, wherein a cookware item 18 is in a first position.

The heating area 10 comprises the first heating zone 12 and the second heating zone 14. The first heating zone 12 includes the first heating element 20 and the second heating element 22. The second heating zone 14 includes the third heating element 24 and the fourth heating element 26. In this embodiment, the first heating zone 12 is provided for a low temperature, while the second heating zone 14 is provided for a high temperature. The cookware item 18 in the first position is arranged above the second heating zone 14 and above the third heating element 24 and fourth heating element 26. In the cookware item 18 the low temperature is generated.

FIG 5 illustrates a schematic top view of the heating area 10 on the cooking hob according to the fourth embodiment of the present invention, wherein the cookware item 18 is in a second position.

The cookware item 18 in the second position is arranged partially above the first heating zone 12 and partially above the second heating zone 14. Further, the cookware item 18 in the second position is arranged above the second heating element 22 and the third heating element 24. In the cookware item 18 an intermediate temperature between the low temperature of the first heating zone 12 and the high temperature of the second heating zone 14 is generated.

FIG 6 illustrates a schematic top view of the heating area 10 on the cooking hob according to the fourth embodiment of the present invention, wherein the cookware item 18 is in a third position.

The cookware item 18 in the third position is arranged above the second heating zone 14 and above the first heating element 20 and the second heating element 22. In the cookware item 18 the high temperature is generated.

In general, the heating area 10 may comprise a plurality of heating elements, wherein said heating elements are arranged as a matrix. By adjusting the temperatures of each heating element the user may define individual heating zones 12, 14 and 16. Thus, the user can determine the size and temperature of each heating zone. Then, the cooking temperature is determined by the position of the cookware item 18 on said heating area 10. Preferably, a temperature sensor corresponds with each heating element.

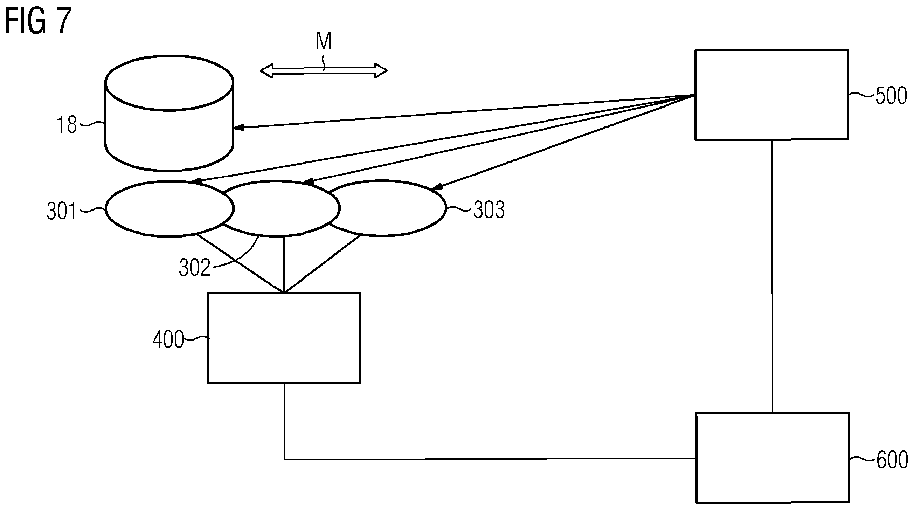

FIG 7 illustrates a closed loop automatic temperature control for a induction cooking hob comprising three induction coils 301, 302, 303 as heating elements. The induction coils 301, 302, 303 are electrically associated to one power unit 400, e.g. being a power circuit board. The induction coils 301, 302, 303 can be driven by the power unit 400, or, in other words, the induction coils 301, 302, 303 can be supplied with energy from the power unit 400. The power unit 400 can drive each coil 301, 302, 303, but also can drive e.g. coils 301 and 302 jointly, thus, forming a joint heating zone comprising the coils 301 and 302 as heating elements. In this case that coil 303 can be driven separately from the jointly driven coils, but it is also possible to form one joint heating zone comprising all three coils 301, 302, 303.

The control signal for controlling the power unit 600 is output from the control unit 600. The control unit 600 comprises a predefined control algorithm which determines the control signals to be output to the power unit 600 in order to achieve a defined temperature characteristic on the cookware item 18 place or positioned above the coils 301, 302, 303 by varying the energy output by the power unit 400. The control algorithm determines the necessary energy output and the corresponding control signals to the power unit 600 on the basis of the temperature parameters as detected by the temperature sensors associated to each coil 301, 302, 303.

The temperature sensors associated with each coil 301, 302, 303 transfer signals representative of temperature parameters detected by the temperature sensors to a temperature measurement unit 500. In the case that two or more coils 301, 302, 303 are coupled to enable a joint heating zone, it is possible that the temperature measurement unit 500 uses the parameter values transferred from one temperature sensor and disregards the parameter values from the other temperature sensors or that the temperature measurement unit 500 uses the parameter values transferred from all temperature sensors involved in the joint heating zone and calculates a value, e.g. a mean value or an average value for being used by the control unit to determine the necessary energy supply to the heating elements in order to control the set temperature properly.

The automatic temperature control allows the cookware item 18 to be moved from one heating zone to another, e.g. from a first cooking zone operating with coil 301 to a joint cooking zone including the coils 302, 303. Since the temperature measurement detects the temperature of the foodstuff within the cookware item or the temperature of the cookware item itself, the temperatures set for the first cooking zone and for the joint cooking zone can be reached or maintained without any delay due to temperature control, because the automatic temperature control according to this embodiment allows to take the temperature on the first heating zone into account for the determination of the necessary energy to be supplied to the joint heating zone when the cookware item is moved to the joint heating zone. This is particularly advantagous in the case that the cookware item is moved to a heating zone where the cookware item shall be subject to lower temperatures.

In particular, it is possible, that the user can switch on the automatic temperature control by moving a cookware item on a specific heating zone, wherein the automatic temperature control is automatically switched on, when the cookware item is recognized on the heating zone, e.g. by a pot detection system, or wherein the automatic temperature control can be switched on by a user by means of user interface.

The temperature measurement can be based on principles known as surface acoustic wave measurement. Alternatively, it is possible that the delay time of the ceramic glas panel of the cooking hob is used to calculate the temperature of the cookware item placed on it. Further, alternatively, it is possible to detect temperatures of the cookware item or the foodstuff placed within the cookware item by analysis of the shape of the current or the shape of the voltage or from the behaviour of the induction frequency.

Although illustrative embodiments of the present invention have been described herein with reference to the accompanying drawings, it is to be understood that the present invention is not limited to those precise embodiments, and that various other changes and modifications may be affected therein by one skilled in the art without departing from the scope of the invention as defined by the appended claims.

### List of reference numerals

- 10: heating area
- 12: first heating zone
- 14: second heating zone
- 16: third heating zone
- 18: cookware item
- 20: first heating element
- 22: second heating element
- 24: third heating element
- 26: fourth heating element
- 301,...,304: induction coils
- 400, 401, 402: power unit
- 500: temperature measurement unit
- 600: control unit

- M: Movement

## Claims

1. A cooking hob for a domestic or an industrial appliance, wherein:
- the cooking hob comprises at least one heating area (10),
- the heating area (10) comprises at least a first and a second heating zone (12, 14, 16), wherein, in a first operation mode, the first and second heating zones (12, 14, 16) are configured for being operated as heating zones separate from each other and, in a second operation mode, the first and second heating zones (12, 14, 16) are configured for being operated as one joint heating zone;
- each of the first and second heating zone (12, 14, 16) includes at least one heating element (20, 22, 24, 26), wherein the first and second heating zones (12, 14, 16) are operable or operated to heat a particular cookware item in such way that foodstuff disposed within the particular cookware is heated to a defined temperature, when the particular cookware is placed above one of the first or second heating zones (12, 14, 16) in the first operation mode, and in such way that foodstuff disposed within the particular cookware is heated to a defined temperature, when the particular cookware is placed at least partially above both the first and second heating zones (12, 14, 16) in the second operation mode;
- wherein the cooking hob further comprises an automatic temperature control for controlling the temperature of the particular cookware or for controlling the temperature of the foodstuff disposed within the particular cookware;
- and wherein the automatic temperature control is configured to control a first separate temperature related to the first heating zone (12, 14, 16) and to control a second separate temperature related to the second heating zone (12, 14, 16) in the case that the first and second heating zones (12, 14, 16) are operated as separate heating zones in the first operation mode and wherein the automatic temperature control is configured to control a first common temperature related to the first and second heating zone (12, 14, 16) in the case that first and second heating zone (12, 14, 16) are operated as one joint heating zone in the second operation mode;
**characterized in that**
the cooking hob enables the user to couple joint heating zones in such way that the set temperatures of the coupled heating zones are jointly adjustable; wherein the difference between the set temperatures of jointly adjustable heating zones (12, 14, 16) is between 10°C and 80°C, preferably between 20°C and 60°C, in particular between 30°C and 40°C;
wherein the automatic temperature control comprises at least one closed loop control for controlling the set temperature of a joint heating zone.

2. The cooking hob according to claim 1,
**characterized in that** the cooking hob enables the user to select, in particular for all heating zones (12,14, 16) provided on the cooking hob, if heating zones shall be operated in the first operation mode or in the second operation mode.

3. The cooking hob according to any one of the preceding claims, **characterized in that** the cooking hob is configured or can be configured by user input
to operate at least a first and second heating zone (12, 14, 16) in the first operation mode
or
to operate at least a first or a second heating zone (12, 14, 16) in the first operation mode and one joint heating zone in the second operation mode at the same time or
to operate at least two joint heating zones at the same time in the second operation mode.

4. The cooking hob according to claim 3, **characterized in that** at least two, preferably at least three, separate and/or joint heating zones (12, 14, 16) can be operated at set temperatures being different from each other, wherein each of the at least two, preferably at least three, heating zones (12, 14, 16) is subject to the automatic temperature control, wherein each of the different set temperatures is controlled separately by the automatic temperature control.

5. The cooking hob according to any one of the preceding claims, **characterized in that** the cooking hob enables the user to switch on or off the automatic temperature control for one or more specific separate or joint heating zones.

6. The cooking hob according to any one of the preceding claims, **characterized in that** the cooking hob enables the user to couple specific separate and/or joint heating zones, by means of only one user input or by means of only one input element.

7. The cooking hob according to any one of the preceding claims, **characterized in that** the automatic temperature control comprises separate closed loop controls for controlling separately each of the first or second heating zone (12, 14, 16) or of a joint heating zone.

8. The cooking hob according to any one of the preceding claims,
**characterised in that**
the cooking hob comprises at least one temperature sensor for each heating zone (12, 14, 16), wherein preferably at least one temperature sensor is provided for each heating element (20, 22, 24, 26).

9. The cooking hob according to claim 8, **characterized in that** the automatic temperature control comprises at least one temperature measurement unit (500), at least one control unit (600) and at least one power unit (400, 401, 402), wherein the temperature measurement unit (500) is configured to receive a signal or signals representative of temperature parameters detected by the temperature sensor associated to a specific separate and/or joint heating zone and/or to transfer a signal or signals representative of temperature parameters detected by the temperature sensor associated to a specific separate and/or joint heating zone to the control unit (600), wherein the control unit (600) outputs a control signal based on the temperature parameter detected by the temperature sensors for a specific separate and/or joint heating zone to the power unit (400, 401, 402) such that the power unit (400, 401, 402) controls the amount of energy supplied to the respective separate and/or joint heating zone in order to constantly maintain the temperature set for the respective separate and/or joint heating zone.

10. The cooking hob according to any of the preceding claims, **characterized in that** the cooking hob comprises at least three heating elements, in particular three induction coils (301,...,305), each heating element being associated with a temperature sensor, and one power unit, in particular comprising a power circuit board, wherein the power unit is operably, in particularly electrically, coupled to each of the heating elements, wherein the power unit can drive each of the heating elements separately and can drive the heating elements in combination such that all heating elements associated to one joint heating zone are driven by the power unit in a way that the a temperature set for the joint heating zone can be constantly maintained.

11. The cooking hob according to any of the preceding claims, **characterized in that** the cooking hob comprises at least four heating elements, in particular four induction coils (301,...,305), and at least two power units (600), wherein each heating element being associated with a temperature sensor, and one power unit, in particular wherein each power unit comprises a power circuit board, wherein the power units are operably, in particular electrically, coupled to heating elements that are exclusively associated to exact one power unit (600), wherein the power units can drive their associated heating elements separately and can drive their associated heating elements in combination such that those heating elements that are associated to one joint heating zone are driven by their associated power unit in a way that the a temperature set for the joint heating zone can be constantly maintained.

12. The cooking hob according to any one of the preceding claims,
**characterised in that**
the cooking hob comprises at least one memory for storing an adjustment or fine adjustment of temperatures on the heating zones (12, 14, 16), wherein preferably the memory is adapted to store the adjustment or fine adjustment, respectively, of temperatures on the heating zones (12, 14, 16) related to at least one individual cookware item (18).

13. The cooking hob according to any one of the preceding claims,
**characterised in that**
the cooking hob is an induction cooking hob, wherein the heating elements (20, 22, 24, 26) are induction coils or wherein the cooking hob is a radiant cooking hob, wherein the heating elements (20, 22, 24, 26) are radiant heating elements, or wherein
the cooking hob is a gas cooking hob, wherein the heating elements (20, 22, 24, 26) are gas burner assemblies.

14. The cooking hob according to any one of the preceding claims,
**characterised in that**
the cooking hob comprises at least one glass ceramic panel covering the heating area (10).

## Patentansprüche

1. Kochfeld für ein Haushalts- oder Industriegerät, wobei:
- das Kochfeld mindestens einen Heizbereich (10) umfasst,
- der Heizbereich (10) mindestens eine erste und eine zweite Heizzone (12, 14, 16) umfasst, wobei in einem ersten Betriebsmodus die erste und die zweite Heizzone (12, 14, 16) dazu konfiguriert sind, als voneinander separate Heizzonen betrieben zu werden, und in einem zweiten Betriebsmodus die erste und die zweite Heizzone (12, 14, 16) dazu konfiguriert sind, als eine gemeinsame Heizzone betrieben zu werden;
- jede der ersten und zweiten Heizzone (12, 14, 16) mindestens ein Heizelement (20, 22, 24, 26) umfasst, wobei die erste und zweite Heizzone (12, 14, 16) betreibbar oder betrieben sind, um ein bestimmtes Kochgeschirr derart zu erwärmen, dass Lebensmittel, die innerhalb des bestimmten Kochgeschirrs angeordnet sind, auf eine definierte Temperatur erwärmt werden, wenn das bestimmte Kochgeschirr über einer der ersten oder zweiten Heizzone (12, 14, 16) in dem ersten Betriebsmodus platziert wird, und auf eine solche Weise, dass Lebensmittel, die innerhalb des bestimmten Kochgeschirrs angeordnet sind, auf eine definierte Temperatur erwärmt werden, wenn das bestimmte Kochgeschirr zumindest teilweise über sowohl der ersten als auch der zweiten Heizzone (12, 14, 16) in dem zweiten Betriebsmodus platziert wird;
- wobei das Kochfeld ferner eine automatische Temperatursteuerung zum Steuern der Temperatur des bestimmten Kochgeschirrs oder zum Steuern der Temperatur der in dem bestimmten Kochgeschirr angeordneten Lebensmittel umfasst;
- und wobei die automatische Temperatursteuerung dazu ausgelegt ist, eine erste separate Temperatur in Bezug auf die erste Heizzone (12, 14, 16) zu steuern und eine zweite separate Temperatur in Bezug auf die zweite Heizzone (12, 14, 16) zu steuern, falls die erste und die zweite Heizzone (12, 14, 16) als separate Heizzonen in dem ersten Betriebsmodus betrieben werden, und wobei die automatische Temperatursteuerung dazu ausgelegt ist, eine erste gemeinsame Temperatur in Bezug auf die erste und zweite Heizzone (12, 14, 16) zu steuern, falls die erste und zweite Heizzone (12, 14, 16) als eine gemeinsame Heizzone in dem zweiten Betriebsmodus betrieben werden;
**dadurch gekennzeichnet, dass**
das Kochfeld es dem Benutzer ermöglicht, gemeinsame Heizzonen so zu koppeln, dass die eingestellten Temperaturen der gekoppelten Heizzonen gemeinsam anpassbar sind; wobei die Differenz zwischen den eingestellten Temperaturen von gemeinsam anpassbaren Heizzonen (12, 14, 16) zwischen 10°C und 80°C, vorzugsweise zwischen 20°C und 60°C, insbesondere zwischen 30°C und 40°C beträgt;
wobei die automatische Temperatursteuerung mindestens eine Regelung zum Steuern der eingestellten Temperatur einer gemeinsamen Heizzone umfasst.

2. Kochfeld nach Anspruch 1,
**dadurch gekennzeichnet, dass** das Kochfeld es dem Benutzer ermöglicht, insbesondere für alle am Kochfeld bereitgestellten Heizzonen (12, 14, 16) auszuwählen, ob Heizzonen im ersten Betriebsmodus oder im zweiten Betriebsmodus betrieben werden sollen.

3. Kochfeld nach einem der vorhergehenden Ansprüche, **dadurch gekennzeichnet, dass** das Kochfeld durch Benutzereingabe konfiguriert wird oder konfigurierbar ist,
um mindestens eine erste und eine zweite Heizzone (12, 14, 16) in dem ersten Betriebsmodus zu betreiben,
oder
um mindestens eine erste oder eine zweite Heizzone (12, 14, 16) im ersten Betriebsmodus und eine gemeinsame Heizzone im zweiten Betriebsmodus gleichzeitig zu betreiben, oder
um mindestens zwei gemeinsame Heizzonen gleichzeitig im zweiten Betriebsmodus zu betreiben.

4. Kochfeld nach Anspruch 3, **dadurch gekennzeichnet, dass** mindestens zwei, vorzugsweise mindestens drei, separate und/oder gemeinsame Heizzonen (12, 14, 16) bei voneinander verschiedenen eingestellten Temperaturen betreibbar sind, wobei jede der mindestens zwei, vorzugsweise mindestens drei, Heizzonen (12, 14, 16) der automatischen Temperatursteuerung unterliegt, wobei jede der unterschiedlichen eingestellten Temperaturen durch die automatische Temperatursteuerung separat gesteuert wird.

5. Kochfeld nach einem der vorhergehenden Ansprüche, **dadurch gekennzeichnet, dass** das Kochfeld es dem Benutzer ermöglicht, die automatische Temperatursteuerung für eine oder mehrere bestimmte separate oder gemeinsame Heizzonen ein- oder auszuschalten.

6. Kochfeld nach einem der vorhergehenden Ansprüche, **dadurch gekennzeichnet, dass** das Kochfeld dem Benutzer ermöglicht, spezifische separate und/oder gemeinsame Heizzonen mittels nur einer Benutzereingabe oder mittels nur eines Eingabeelements zu koppeln.

7. Kochfeld nach einem der vorhergehenden Ansprüche, **dadurch gekennzeichnet, dass** die automatische Temperatursteuerung separate Regelungen umfasst, um jede der ersten oder zweiten Heizzone (12, 14, 16) oder einer gemeinsamen Heizzone separat zu steuern.

8. Kochfeld nach einem der vorhergehenden Ansprüche, **dadurch gekennzeichnet, dass**
das Kochfeld für jede Heizzone (12, 14, 16) mindestens einen Temperatursensor umfasst, wobei vorzugsweise für jedes Heizelement (20, 22, 24, 26) mindestens ein Temperatursensor bereitgestellt ist.

9. Kochfeld nach Anspruch 8, **dadurch gekennzeichnet, dass** die automatische Temperatursteuerung mindestens eine Temperaturmesseinheit (500), mindestens eine Steuereinheit (600) und mindestens eine Leistungseinheit (400, 401, 402) umfasst, wobei die Temperaturmesseinheit (500) dazu ausgelegt ist, ein Signal oder Signale zu empfangen, die für Temperaturparameter repräsentativ sind, die durch den Temperatursensor detektiert werden, der mit einer spezifischen separaten und/oder gemeinsamen Heizzone assoziiert ist, und/oder ein Signal oder Signale, die für Temperaturparameter repräsentativ sind, die durch den Temperatursensor detektiert werden, der mit einer spezifischen separaten und/oder gemeinsamen Heizzone assoziiert ist, an die Steuereinheit (600) zu übertragen, wobei die Steuereinheit (600) ein Steuersignal basierend auf dem Temperaturparameter, der durch die Temperatursensoren für eine spezifische separate und/oder gemeinsame Heizzone detektiert wird, an die Leistungseinheit (400, 401, 402) ausgibt, sodass die Leistungseinheit (400, 401, 402) die Menge an Energie, die der jeweiligen separaten und/oder gemeinsamen Heizzone zugeführt wird, steuert, um die für die jeweilige separate und/oder gemeinsame Heizzone eingestellte Temperatur konstant zu halten.

10. Kochfeld nach einem der vorhergehenden Ansprüche, **dadurch gekennzeichnet, dass** das Kochfeld mindestens drei Heizelemente, insbesondere drei Induktionsspulen (301, ..., 305), umfasst, wobei jedes Heizelement mit einem Temperatursensor assoziiert ist, und einer Leistungseinheit, insbesondere umfassend eine Leistungsleiterplatte, wobei die Leistungseinheit mit jedem der Heizelemente betriebsfähig, insbesondere elektrisch, gekoppelt ist, wobei die Leistungseinheit jedes der Heizelemente separat antreiben kann und die Heizelemente in Kombination antreiben kann, sodass alle mit einer gemeinsamen Heizzone assoziierten Heizelemente von der Leistungseinheit derart angesteuert werden, dass die für die gemeinsame Heizzone eingestellte Temperatur konstant gehalten werden kann.

11. Kochfeld nach einem der vorhergehenden Ansprüche, **dadurch gekennzeichnet, dass** das Kochfeld mindestens vier Heizelemente, insbesondere vier Induktionsspulen (301, ..., 305), und mindestens zwei Leistungseinheiten (600) umfasst, wobei jedes Heizelement mit einem Temperatursensor assoziiert ist, und einer Leistungseinheit, insbesondere wobei jede Leistungseinheit eine Leistungsleiterplatte umfasst, wobei die Leistungseinheiten betriebsfähig, insbesondere elektrisch, mit Heizelementen gekoppelt sind, die ausschließlich mit genau einer Leistungseinheit (600) assoziiert sind, wobei die Leistungseinheiten ihre assoziierten Heizelemente separat antreiben können und ihre assoziierten Heizelemente in Kombination antreiben können, sodass diejenigen Heizelemente, die mit einer gemeinsamen Heizzone assoziiert sind, von ihrer assoziierten Leistungseinheit derart angesteuert werden, dass die für die gemeinsame Heizzone eingestellte Temperatur konstant gehalten werden kann.

12. Kochfeld nach einem der vorhergehenden Ansprüche, **dadurch gekennzeichnet, dass**
das Kochfeld mindestens einen Speicher zum Speichern einer Anpassung oder Feinanpassung von Temperaturen an den Heizzonen (12, 14, 16) umfasst, wobei vorzugsweise der Speicher dazu eingerichtet ist, die Anpassung bzw. Feinanpassung von Temperaturen an den Heizzonen (12, 14, 16) in Bezug auf mindestens ein einzelnes Kochgeschirr (18) zu speichern.

13. Kochfeld nach einem der vorhergehenden Ansprüche, **dadurch gekennzeichnet, dass**
das Kochfeld ein Induktionskochfeld ist, wobei die Heizelemente (20, 22, 24, 26) Induktionsspulen sind oder wobei das Kochfeld ein Strahlungskochfeld ist, wobei die Heizelemente (20, 22, 24, 26) Strahlungsheizelemente sind, oder wobei
das Kochfeld ein Gaskochfeld ist, wobei die Heizelemente (20, 22, 24, 26) Gasbrennerbaugruppen sind.

14. Kochfeld nach einem der vorhergehenden Ansprüche,
**dadurch gekennzeichnet, dass**
das Kochfeld mindestens eine den Heizbereich (10) abdeckende Glaskeramikplatte umfasst.

## Revendications

1. Plaque de cuisson pour un appareil domestique ou industriel,
- la plaque de cuisson comprenant au moins une zone chauffante (10),
- la zone chauffante (10) comprenant au moins une première et une deuxième zone chauffante (12, 14, 16) ; dans un premier mode de fonctionnement, les première et deuxième zones chauffantes (12, 14, 16) étant configurées pour fonctionner comme des zones chauffantes distinctes l'une de l'autre et, dans un deuxième mode de fonctionnement, les première et deuxième zones chauffantes (12, 14, 16) étant configurées pour fonctionner comme une seule zone chauffante conjointe ;
- chacune des première et deuxième zones chauffantes (12, 14, 16) comportant au moins un élément chauffant (20, 22, 24, 26), les première et deuxième zones chauffantes (12, 14, 16) pouvant fonctionner ou fonctionnant pour chauffer un ustensile de cuisson particulier, de manière à ce qu'une denrée alimentaire disposée à l'intérieur de l'ustensile de cuisson particulier soit chauffée jusqu'à atteindre une température définie, lorsque l'ustensile de cuisson particulier est placé au-dessus de l'une des première ou deuxième zones chauffantes (12, 14, 16) dans le premier mode de fonctionnement, et de manière à ce qu'une denrée alimentaire disposée à l'intérieur de l'ustensile de cuisson particulier soient chauffée jusqu'à atteindre une température définie, lorsque l'ustensile de cuisson particulier est placé au moins partiellement au-dessus à la fois de la première et de la deuxième zone chauffante (12, 14, 16) dans le deuxième mode de fonctionnement ;
- la plaque de cuisson comprenant en outre une régulation automatique de la température pour réguler la température de l'ustensile de cuisson particulier ou pour réguler la température de la denrée alimentaire disposée à l'intérieur de l'ustensile de cuisson particulier ;
- et la régulation automatique de la température étant configurée pour réguler une première température distincte relative à la première zone chauffante (12, 14, 16) et pour réguler une deuxième température distincte relative à la deuxième zone chauffante (12, 14, 16) dans le cas où les première et deuxième zones chauffantes (12, 14, 16) fonctionnent comme des zones chauffantes distinctes dans le premier mode de fonctionnement, et la régulation automatique de la température étant configurée pour réguler une première température commune relative aux première et deuxième zones chauffantes (12, 14, 16) dans le cas où les première et deuxième zones chauffantes (12, 14, 16) fonctionnent comme une seule zone chauffante conjointe dans le deuxième mode de fonctionnement ;
**caractérisée en ce que**
la plaque de cuisson permet à l'utilisateur de coupler des zones chauffantes conjointes de manière à ce que les températures de consigne des zones chauffantes couplées soient réglables conjointement ; la différence entre les températures de consigne de zones chauffantes réglables conjointement (12, 14, 16) étant comprise entre 10 °C et 80 °C, de préférence entre 20 °C et 60 °C, en particulier entre 30 °C et 40 °C ;
la régulation automatique de la température comprenant au moins une régulation en boucle fermée pour réguler la température de consigne d'une zone chauffante conjointe.

2. Plaque de cuisson selon la revendication 1, **caractérisée en ce que** la plaque de cuisson permet à l'utilisateur de sélectionner, en particulier pour toutes les zones chauffantes (12, 14, 16) situées sur la plaque de cuisson, si des zones chauffantes doivent fonctionner dans le premier mode de fonctionnement ou dans le deuxième mode de fonctionnement.

3. Plaque de cuisson selon l'une quelconque des revendications précédentes, **caractérisée en ce que** la plaque de cuisson est configurée ou peut être configurée par une entrée utilisateur
pour faire fonctionner au moins une première et une deuxième zone chauffante (12, 14, 16) dans le premier mode de fonctionnement
ou
pour faire fonctionner simultanément au moins une première ou une deuxième zone chauffante (12, 14, 16) dans le premier mode de fonctionnement et une seule zone chauffante conjointe dans le deuxième mode de fonctionnement ou
pour faire fonctionner simultanément au moins deux zones chauffantes conjointes dans le deuxième mode de fonctionnement.

4. Plaque de cuisson selon la revendication 3, **caractérisée en ce qu'**au moins deux, de préférence au moins trois, zones chauffantes distinctes et/ou conjointes (12, 14, 16) peuvent fonctionner à des températures de consigne différentes les unes des autres, chacune des au moins deux, de préférence au moins trois, zones chauffantes (12, 14, 16) étant soumise à la régulation automatique de la température, chacune des différentes températures de consigne étant régulée de manière distincte par la régulation automatique de la température.

5. Plaque de cuisson selon l'une quelconque des revendications précédentes, **caractérisée en ce que** la plaque de cuisson permet à l'utilisateur d'activer ou de désactiver la régulation automatique de la température pour une ou plusieurs zones chauffantes distinctes ou conjointes spécifiques.

6. Plaque de cuisson selon l'une quelconque des revendications précédentes, **caractérisée en ce que** la plaque de cuisson permet à l'utilisateur de coupler des zones chauffantes distinctes et/ou conjointes spécifiques, au moyen d'une seule et unique entrée utilisateur ou au moyen d'un seul et unique élément d'entrée.

7. Plaque de cuisson selon l'une quelconque des revendications précédentes, **caractérisée en ce que** la régulation automatique de la température comprend des régulations en boucle fermée distinctes pour réguler de manière distincte chacune des première ou deuxième zones chauffantes (12, 14, 16) ou une zone chauffante conjointe.

8. Plaque de cuisson selon l'une quelconque des revendications précédentes,
**caractérisée en ce que**
la plaque de cuisson comprend au moins un capteur de température pour chaque zone chauffante (12, 14, 16), au moins un capteur de température étant de préférence prévu pour chaque élément chauffant (20, 22, 24, 26).

9. Plaque de cuisson selon la revendication 8, **caractérisée en ce que** la régulation automatique de la température comprend au moins une unité de mesure de la température (500), au moins une unité de régulation (600) et au moins une unité d'alimentation (400, 401, 402), l'unité de mesure de la température (500) étant configurée pour recevoir un ou des signaux représentant des paramètres de température détectés par le capteur de température associé à une zone chauffante distincte et/ou conjointe spécifique et/ou pour transférer à l'unité de régulation (600) un ou des signaux représentant des paramètres de température détectés par le capteur de température associé à une zone chauffante distincte et/ou conjointe spécifique, l'unité de régulation (600) délivrant à l'unité d'alimentation (400, 401, 402) un signal de régulation basé sur le paramètre de température détecté par les capteurs de température pour une zone chauffante distincte et/ou conjointe spécifique, de telle sorte que l'unité d'alimentation (400, 401, 402) régule la quantité d'énergie fournie à la zone chauffante distincte et/ou conjointe respective afin de maintenir constamment la température de consigne pour la zone chauffante distincte et/ou conjointe respective.

10. Plaque de cuisson selon l'une quelconque des revendications précédentes, **caractérisée en ce que** la plaque de cuisson comprend au moins trois éléments chauffants, en particulier trois bobines à induction (301, ..., 305), chaque élément chauffant étant associé à un capteur de température, et une seule unité d'alimentation, en particulier comprenant une carte de circuit imprimé d'alimentation, l'unité d'alimentation étant couplée fonctionnellement, en particulier électriquement, à chacun des éléments chauffants, l'unité d'alimentation pouvant piloter chacun des éléments chauffants de manière distincte et pouvant piloter les éléments chauffants en combinaison de telle sorte que tous les éléments chauffants associés à une seule zone chauffante conjointe soient pilotés par l'unité d'alimentation de manière à ce que la température de consigne pour la zone chauffante conjointe puisse être constamment maintenue.

11. Plaque de cuisson selon l'une quelconque des revendications précédentes, **caractérisée en ce que** la plaque de cuisson comprend au moins quatre éléments chauffants, en particulier quatre bobines à induction (301, ..., 305), et au moins deux unités d'alimentation (600), chaque élément chauffant étant associé à un capteur de température, et une seule unité d'alimentation, en particulier chaque unité d'alimentation comprenant une carte de circuit imprimé d'alimentation, les unités d'alimentation étant couplées fonctionnellement, en particulier électriquement, à des éléments chauffants exclusivement associés exactement à une seule unité d'alimentation (600), les unités d'alimentation pouvant piloter leurs éléments chauffants associés de manière distincte et pouvant piloter leurs éléments chauffants associés en combinaison de telle sorte que les éléments chauffants qui sont associés à une seule zone chauffante conjointe soient pilotés par leur unité d'alimentation associée de manière à ce que la température de consigne pour la zone chauffante conjointe puisse être constamment maintenue.

12. Plaque de cuisson selon l'une quelconque des revendications précédentes,
**caractérisée en ce que**
la plaque de cuisson comprend au moins une mémoire pour stocker un réglage ou un réglage fin des températures sur les zones chauffantes (12, 14, 16), la mémoire étant de préférence conçue pour stocker respectivement le réglage ou le réglage fin des températures sur les zones chauffantes (12, 14, 16) relatives à au moins un ustensile de cuisson (18) individuel.

13. Plaque de cuisson selon l'une quelconque des revendications précédentes,
**caractérisée en ce que**
la plaque de cuisson est une plaque de cuisson à induction, les éléments chauffants (20, 22, 24, 26) étant des bobines à induction, ou la plaque de cuisson est une plaque de cuisson rayonnante, les éléments chauffants (20, 22, 24, 26) étant des éléments chauffants rayonnants, ou
la plaque de cuisson est une plaque de cuisson à gaz, les éléments chauffants (20, 22, 24, 26) étant des ensembles de brûleurs à gaz.

14. Plaque de cuisson selon l'une quelconque des revendications précédentes,
**caractérisée en ce que**
la plaque de cuisson comprend au moins un panneau en vitrocéramique recouvrant la zone chauffante (10).
